(19) 

Europäisches
Patentamt
European
Patent Office
Office européen
des brevets

(11) **EP 4 425 287 A1**

(12) **EUROPEAN PATENT APPLICATION**

(43) Date of publication:
**04.09.2024 Bulletin 2024/36**

(21) Application number: **23159892.1**

(22) Date of filing: **03.03.2023**

(51) International Patent Classification (IPC):
**G05B 19/418** $^{(2006.01)}$

(52) Cooperative Patent Classification (CPC):
**G05B 19/41855**; G05B 2219/25232;
G05B 2219/33283

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **BASF SE**
**67056 Ludwigshafen am Rhein (DE)**

(72) Inventor: **Gau, Sebastian**
**67061 Ludwigshafen am Rhein (DE)**

(74) Representative: **BASF IP Association**
**BASF SE**
**GBI-C006**
**67056 Ludwigshafen (DE)**

(54) **REMOTE CONTROL OF A DISTRIBUTED MANUFACTURING AUTOMATION SYSTEM**

(57) The present subject matter relates to a method comprising creating in a distributed manufacturing automation system (100, 200) overlay networks (300, 400, 500, 600) of nodes, wherein each overlay network of the overlay networks (300, 400, 500, 600) spans one or more levels (101, 113, 115, 117) of an automation pyramid, wherein the nodes represent system resources of networks (130, 133, 135, 137) of the system (100, 200). An application for performing a manufacturing task may be created. The application may be divided into application components according to the predefined functions and information flow, wherein the application components belong to one or more levels (101, 113, 115, 117) of the automation pyramid. One or more overlay networks (300, 400, 500, 600) that enable execution of the application components may be selected. Connections to the selected overlay networks (300, 400, 500, 600) may be established. The application components may be deployed in the selected overlay networks (300, 400, 500, 600) using the established connections. The application may be used for planning and/or controlling the manufacturing in the distributed manufacturing automation system (100, 200).

Fig. 3

Processed by Luminess, 75001 PARIS (FR)

EP 4 425 287 A1

## Description

Technical Field

Various example embodiments relate to automation systems, and more particularly to an apparatus and method for controlling a distributed manufacturing automation system.

Background

In digitalization of process industry and manufacturing, the automation pyramid is a commonly used system architecture. The automation pyramid may be a reference model for an enterprise architecture. As an attempt to structure all systems involved in the manufacturing process and applicable to chemical process industry as well as discrete manufacturing, it is used for various purposes such as for providing IT security.

Summary

Example embodiments provide a method for controlling a distributed manufacturing automation system, the distributed manufacturing automation system being configured in accordance with an automation pyramid, the distributed manufacturing automation system comprising networks and firewalls between levels of the automation pyramid, wherein each network is associated with one level of the automation pyramid, the automation pyramid indicating predefined functions of the networks and an information flow between the levels of the automation pyramid; the method comprising: providing an application manager that is configured to remotely connect to the distributed manufacturing automation system; creating by the application manager in the distributed manufacturing automation system overlay networks of nodes, wherein each overlay network of the overlay networks spans one or more levels of the automation pyramid, wherein the nodes represent system resources of the networks; creating by the application manager an application for performing a manufacturing task; dividing by the application manager the application into application components according to the predefined functions and information flow, wherein the application components belong to one or more levels of the automation pyramid; selecting by the application manager one or more overlay networks that enable execution of the application components; establishing by the application manager connections to the selected overlay networks; deploying, by the application manager using the established connections, the application components in the selected overlay networks; using the application by the application manager for planning and/or controlling the manufacturing in the distributed manufacturing automation system.

Example embodiments provide a computer program product comprising a computer-readable storage medium having computer-readable program code embodied therewith, the computer-readable program code configured to implement the method of the preceding embodiments.

Example embodiments provide a distributed manufacturing automation system, the distributed manufacturing automation system being configured in accordance with an automation pyramid, the distributed manufacturing automation system comprising networks and firewalls between levels of the automation pyramid, wherein each network is associated with one level of the automation pyramid, the automation pyramid indicating predefined functions of the networks and an information flow between the levels of the automation pyramid; the distributed manufacturing automation system comprising an application manager being configured for: creating in the distributed manufacturing automation system overlay networks of nodes, wherein each overlay network of the overlay networks spans one or more levels of the automation pyramid, wherein the nodes represent system resources of the networks; creating an application for performing a manufacturing task; dividing the application into application components according to the predefined activities and information flow, wherein the application components belong to one or more levels of the automation pyramid; selecting one or more overlay networks that enable execution of the application components; establishing connections to the selected overlay networks; deploying using the established connections, the application components in the selected overlay networks; using the application for planning and/or controlling the manufacturing in the distributed manufacturing automation system.

The computer program product may be a computer program. The computer program product may refer to any set of one, or more, storage media (also called "mediums") collectively included in a set of one, or more, storage devices that collectively include machine readable code corresponding to instructions and/or data for performing computer operations specified in the computer program product claim. A "storage device" may be any tangible device that can retain and store instructions for use by a computer processor.

Brief Description of the Drawings

The accompanying figures are included to provide a further understanding of examples, and are incorporated in and constitute part of this specification. In the figures:

FIG. 1 depicts a distributed manufacturing automation system in accordance with an example of the present subject matter;

FIG. 2 depicts a distributed manufacturing automation system in accordance with an example of the present subject matter;

FIG. 3 depicts an overlay network in accordance with an example of the present subject matter;

FIG. 4 depicts an overlay network in accordance with an example of the present subject matter;

FIG. 5 depicts an overlay network in accordance with an example of the present subject matter;

FIG. 6 depicts an overlay network in accordance with an example of the present subject matter;

FIG. 7 is a flowchart of a method for controlling distributed manufacturing automation system in accordance with an example of the present subject matter;

FIG. 8 is a flowchart of a method for deploying an application in a distributed manufacturing automation system in accordance with an example of the present subject matter;

FIG. 9 is a flowchart of a method for deploying an application in a distributed manufacturing automation system in accordance with an example of the present subject matter;

FIG. 10 is a computer system in accordance with an example of the present subject matter.

Detailed Description

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

Automation, in the context of manufacturing, may refer to the use of devices such as sensors, actuators, robots and computers to automate manufacturing processes. The manufacturing process may, for example, refer to the steps of a method used to prepare a composition. The manufacturing process may be a production of biochemicals or chemicals such as solvents, amines, resins, glues, electronic-grade chemicals, industrial gases, basic petrochemicals, and inorganic chemicals. The manufacturing process may involve the use of manufacturing facilities such as equipment, raw materials, machinery, tools, plant etc. The manufacturing process may have one or more properties (herein referred to as manufacturing properties). Examples of manufacturing properties may comprise the temperature, the pressure, the process time, the melting point of a substance, the flexural strength of a steel, the resistance of an electrical conductor etc. The manufacturing process may have one or more parameters (herein referred to as manufacturing parameters) that enable control of the manufacturing process. Examples of manufacturing parameters may comprise mixing rate, temperature etc. Automation, and thus control, of the manufacturing process may be performed by acquiring process data, analysing the process data and automatically adjusting a manufacturing parameter based on the analysis. The process data may comprise values of one or more manufacturing properties of the manufacturing process. Different types of control may be provided depending on the acquired process data and/or type of the analysis and/or type of controlled manufacturing parameters. For example, one type of control may check property values against thresholds and adapt one or more manufacturing parameters accordingly. Another type of control may perform a more sophisticated (time consuming) analysis of the manufacturing property in order to adjust one or more manufacturing parameters. The different types of control may have different time frames of the control e.g., the control may be real-time or non-real time control. Each type of control of the manufacturing process may have a respective time frame within which the control of the manufacturing process may have to be performed.

The control of the manufacturing process may advantageously be performed by a distributed manufacturing automation system. The distributed manufacturing automation system may comprise dispersed manufacturing facilities and various devices which may be spread across multiple systems located in different locations. The distributed manufacturing automation system may be implemented in accordance with a functional model in order to enable the different types of control of the manufacturing process. The functional model may define a function of individual devices, how data is exchanged and formatted within the distributed manufacturing automation system, and how the devices are interconnected within the distributed manufacturing automation system. In one example, the functional model may be the ISA-95 functional model. The functional model may, for example, be a hierarchical pyramidal model.

The distributed manufacturing automation system being configured as an automation pyramid means that the distributed manufacturing automation system is implemented in accordance with a functional model which is a hierarchical pyramidal model. The hierarchical pyramidal model and the automation pyramid may interchangeably be used herein. The hierarchical pyramidal model may define sets of functions to realize specific types of control of the manufacturing process. The function may be performed by one or more devices of the distributed manufacturing automation system. The hierarchical pyramidal model may further define the information flow in the distributed manufacturing automation system, the information flow enabling the sets of functions. For example, the functional model may describe a hierarchical arrangement of devices of the distributed manufacturing automation system according to a field level, control level, supervision level and information level. The field level may be the lowest level which may include field devices such as sensors and actuators. The field devices may be configured to transfer the process data of the manufacturing process to the next higher level for monitoring and analysis. For example, sensors may convert real time manufacturing properties such as temperature and pressure into sensor data. The sensor data may further be transferred to a controller so as to analyse the real time properties. Actuators may convert electrical signals from controllers into mechanical means to control the manufacturing process. The control level may consist of various controllers such as Programmable Logic Controllers (PLCs) which may acquire the manufacturing properties from various sensors. The controllers may drive actuators based on the processed sensor data and control technique. The supervision level may consist of monitoring devices that enable intervening functions, supervising various manufacturing properties, setting production targets, historical archiving, setting machine start and shutdown, etc. The information level may manage the whole distributed manufacturing automation system. The tasks of this level may include production planning, customer and market analysis, orders and sales etc.

The resources of the distributed manufacturing automation system may advantageously be used by organizing them in networks, herein referred to as physical networks. A physical network may be a set of nodes, herein also named physical nodes, using a common communication protocol over interconnections to communicate with each other. The physical node may be any device of the distributed manufacturing automation system having computer processing capabilities. The physical node may, for example, be a computer, a field device, a server or a networking hardware. The physical node may, in another example, be a virtual machine (VM) using physical resources of an underlying system. The physical node may represent system resources of the distributed manufacturing automation system e.g., the physical node may be defined by the number of CPU cores, memory capacity, and local file system size that belongs to the node or that are allocated to the physical node.

The physical networks may be provided in a hierarchical structure in accordance with the hierarchical pyramidal model. For example, each level of the automation pyramid may comprise one or more physical networks of nodes that belong to the level. The physical nodes of each physical network may be configured to perform a type of control of the manufacturing process. The physical network may be a public network or a private network depending on the level of the automation pyramid to which the physical network belongs. For example, the physical network of the highest level of the automation pyramid may be a public network and the physical networks of the lower levels may be private networks. The private network refers to a network, wherein communication between a device outside the private network to a device inside the private network is controlled by access rules such as firewall rules. The public network refers to a network, wherein each device of the public network is publicly available.

Hence, the present subject matter may provide a networked structure of the distributed manufacturing automation system that may enable an optimal control of the manufacturing process. The manufacturing process may be controlled using one or more manufacturing tasks. The manufacturing task may control the manufacturing process according to one or more type of controls. For example, the manufacturing task may enable real time control and/or offline control. The manufacturing task refers to a set of processing steps that enables to perform one or more type of controls of the manufacturing process. A step may be a unit of computation. Steps of the manufacturing task may or may not be dependent. For example, a step of the manufacturing task may depend on the completion of other steps before its execution. The step may run one or more programs or scripts on the respective node to perform a function. The execution and monitoring of the manufacturing task may be a challenging task due to their intrinsic distributed nature in the distributed manufacturing automation system. The present subject matter may solve this issue by a centralized control of the manufacturing task. The centralized control may identify and reach a global optimization condition for the whole task execution from a single point. This may improve execution of the manufacturing tasks. In particular, an application manager is provided. The application manager may, for example, be a computer system. The application manager may connect remotely to the distributed manufacturing automation system. The application manager may control the manufacturing task at the distributed manufacturing automation system.

The execution of the manufacturing task may further be improved by isolating the manufacturing task from the physical infrastructure through abstraction of the physical resources such as the physical networks. For that, the present subject matter may use network virtualization. The network virtualization may enable to separate the virtual network configuration and topologies from the physical networks underneath. The network virtualization may allow dynamic provisioning of network segments for elastic computing environments. The network virtualization may be used to run multiple separate, discrete virtualized network layers on top of a single physical network. In particular, the application manager may create multiple overlay networks. Each overlay network of one or more of the created overlay networks may be a logical computer network that is layered on top of one or more physical networks of the distributed manufacturing automation system. Additionally, or alternatively, two or more of the created overlay networks may be layered on top of a single physical network. Each overlay network of the created overlay networks may span one or more levels of the automation pyramid. This may be advantageous as it may provide a unified view of the different levels of the automation pyramid. The overlay network may comprise nodes, herein referred to as overlay nodes. Each overlay network may be associated with a respective mapping. The mapping may establish the connection between the overlay network and the physical network. In particular, the mapping may indicate for each overlay node, the associated physical node. For example, one or more overlay nodes may be associated with one physical node. The mapping may further indicate for each link in the overlay network the associated one or more links in the underlying physical network. For example, a direct communication in the overlay network may be realized by routing information along certain paths in the underlying physical network. The overlay network may be configured according to an overlay network protocol in order to enable communication between application components in overlay nodes which are connected to the overlay network. The overlay network protocol may, for example, encapsulate, within an outer packet of the underlying physical network, network packets comprising data and identity information of communicating application components. This encapsulation may be transparent to the physical network. That is, the physical network may process the outer packets as they do not have any additional encapsulated data.

The overlay networks may advantageously be used according to the present subject matter to perform the manufacturing task. For example, the application manager may create an application to carry out the manufacturing task. The application may comprise a computer program. For example, the application manager may prompt a user to provide the computer program of the application. Upon receiving the computer program, the application manager may create the application using the received computer program e.g., by creating a specific file of the application, adding dependencies etc. Alternatively, the application manager may receive a request to perform the manufacturing task, wherein the request comprises the computer program of the application. The application manager may create the application using the computer program received in the request. The application may be divided into application components according to the predefined functions and information flow of the distributed manufacturing automation system. For example, each application component may perform at least one step of the manufacturing task for implementing one specific function. For example, if the manufacturing task involves more than one level of the automation pyramid, the application may comprise at least one component per level. The execution of each application component may require a device of a specific pyramid level that enables the function of the application component and may further require a minimum set of resources in said device. The resources may, for example, comprise CPU resources, memory resources, storage resources and a specific software configuration (e.g., specific operating system, specific libraries, specific kernel version etc.). Based on the requirement of each application component, the application manager may select the appropriate one or more overlay networks that enable the execution of the application components. The application manager may assign the application components to respective overlay nodes of the selected overlay network(s) that fulfill the requirements of the application components. For example, one or more application components may be assigned to an overlay node for execution. This assignment may result in a collection of overlay nodes of the selected overlay network(s) that may be used to run the manufacturing task. The application manager may thus deploy the application components in the selected overlay network(s) based on the assignment. After being deployed, the application may be used by the application manager for controlling the manufacturing process in the distributed manufacturing automation system. The execution of the application may result in one or more values of manufacturing parameters of the manufacturing process. These values of the manufacturing parameters may be provided by the application manager or by an application component so that the manufacturing process may be controlled using the values of the manufacturing parameters. For example, the values of the manufacturing parameters may be provided to one or more devices of the field level so that the one or more devices may control the manufacturing process according to the values of the manufacturing parameters.

The present subject matter may further improve the deployment of the application and thus execution of the manufacturing task by using another virtualization level in combination with the network virtualization. Indeed, the application may be developed in a specific environment, with specific libraries, a specific kernel version etc. However, the specific environment may not be satisfied or provided in every level of the distributed manufacturing automation system. For that, the application manager may containerize the application to provide the application components as containers. That is, the application manager may containerize the application components into respective containers that are prepared with the necessary dependencies. Containerisation may be the packaging of the software code of the application component with just the operating system (OS) libraries and dependencies required to run the code to create a single lightweight executable which is a container that may run consistently on any infrastructure. Containerization may allow to create and deploy applications faster and more securely. This may further be advantageous because regardless of the device the containers run on, they may always have the same libraries, the same configuration and may run exactly the same as on the developer's machine. This may further be advantageous as in case of manufacturing systems, the devices involved in different levels may have different capabilities. The overlay network may be an intermediate layer between the containers and the underlying network devices.

In one example, the application manager may containerize the application only if the selected overlay networks cover a selected level of the distributed manufacturing automation system. For example, the selected level may be a user defined level. For example, if the selected overlay network covers a supervision level, the devices of this level (the monitoring devices) may not have enough resources to provide all possible dependencies of the application components. For that, the containerization may advantageously be used for the execution of the application components in the monitoring devices.

The containers may, for example, be created using a container platform such as KUBERNETES platform or DOCKER platform. The container platform may create clusters of physical nodes for enabling the execution of the containers. The selected one or more overlay networks may be layered on top of an existing cluster. For example, a cluster may be provided for each overlay network for running the containerized application components. The clusters comprise container orchestrators respectively. The container manager may establish connections with the container orchestrators of the clusters of the selected overlay networks. The deployment of the application components may be performed by creating a configuration file comprising configuration parameters of the application, and controlling the container orchestrators for applying the configuration for the deployment.

An example deployment method may be provided as follows. A user may submit a request to the application manager to deploy the application. For example, the application manager may provide an interface such as a web interface that provides options to select and specify parameters of the application. The application manager may allow the user to choose the rule to distribute the containers across the overlay nodes. This may increase both cluster utilization and throughput. The application manager may determine that an overlay network may be able to execute the application. The overlay network may be an overlay network that is layered on top of an existing cluster. The application manager may receive available nodes of the overall overlay network. Based on the requirements of the application, the application manager may choose appropriate overlay nodes of the overlay network. The application manager may communicate with the orchestrator of the cluster to deploy the containers of the application on the chosen overlay nodes. The application manager may launch the orchestrator to block the amount of allocated resources for the containers in each of the participating overlay nodes. After that, the application manager may initiate or launch the execution of the application.

The created application may support a declarative configurability so that individual components may be configured declaratively. This may be advantageous because desired properties may be pre-specified and the application manager may autonomously build a suitable configuration by interpreting these specifications. This may prevent the configuration of the application components via direct interaction e.g., with a graphical user interface. The declarative configuration may particularly be useful for describing and managing deployments in a structured fashion. For example, the application manager may deploy the application components by creating a configuration file comprising configuration parameters of the application and may control the selected overlay networks for applying the configuration. The configuration parameters may, for example, be provided as a desired configuration for the deployment of the application components. For example, the developers of the application may declaratively specify how the application components should be deployed by specifying values of the configuration parameters e.g., a minimum and maximum number of nodes available, the instance size, etc. This makes the deployment declarative.

In one example, the configuration parameters may comprise software-defined networking parameters. The software-defined networking parameters may comprise firewall parameters of the firewalls for communication between the application components through the firewalls. This may enable to control the security level at which the data is communicated between the application components.

In one example, the configuration parameters may comprise CPU usage parameters. This may, for example, enable to set a maximum CPU usage per component of the application or per group of components of the application.

In one example, the configuration parameters may comprise memory usage parameters. This may, for example, enable to set an amount of memory to be used per component of the application or per group of components of the application.

The application manager may configure the application components to communicate according to a secure communication protocol in order to perform the manufacturing task. This may enable a secure control of the manufacturing process and may prevent attacks, tampering from adversaries and loss of confidentiality of the manufacturing process. In one example, the secure communication protocol may only be used for communication if the communicating components of the application belong to different levels of the automation pyramid. Additionally, or alternatively, the secure communication protocol may be used if the communication involves an application component that belongs to a public network. This example may enable to create secure communication routes between application components. The secure communication protocol may include software defined network configuration changes or application configuration changes to establish secure connectivity between application components, either directly based on a client-server model or decoupled by utilizing intermediate message brokers. The present subject matter may provide a flexible implementation of the secure communication protocol using alternative implementations. The secure communication protocol indicates for each application component of the application to communicate with another application component using: a direct communication according to a client-server model, or an indirect communication through an intermediate module that translates a message from a messaging protocol of the application component to another messaging protocol of the other application component, or a communication through a firewall based on predefined firewall parameters. In the client server model, one application component acts as a client and the other application component acts as a server. For example, the server component may provide a function or service to the client component which initiates requests for such services. This model may be secure because the requests and responses may only be accepted if they originate from the two involved components. This may be enabled by changing application configurations so that the client server model may be implemented in a secure manner. The indirect communication through the intermediate module may, for example, be secured by enabling a check point at the intermediate module. The intermediate module may, for example, be a message broker. The message broker may be a computer program module that translates a message from the formal messaging protocol of the sender to the formal messaging protocol of the receiver. The function of the intermediate module may be configured through application configurations.

In order to further secure the control of the manufacturing process, the application manager may create a security zone in the selected overlay networks. The security zone comprises a subset of the overlay nodes of the selected overlay networks that enable execution of the application, wherein the overlay nodes of the security zone are configured with specific communication rules and specific usage rules that are fulfilled by the deployed application only. The security zone may enable to separate the application from other applications, so that multiple users can securely share resources.

Network segregation may be used to define and separate security zones. The network segregation may be done exclusively based on software defined networking. This may ensure application components can be deployed alongside with the required network communication routes in a seamless fashion. Dependency on physical firewalls which may not be managed automatically may be performed manually. The network segregation may, for example, be optimally integrated in a networking stack such as KUBERNETES networking stack for cluster-internal and cross-cluster communication.

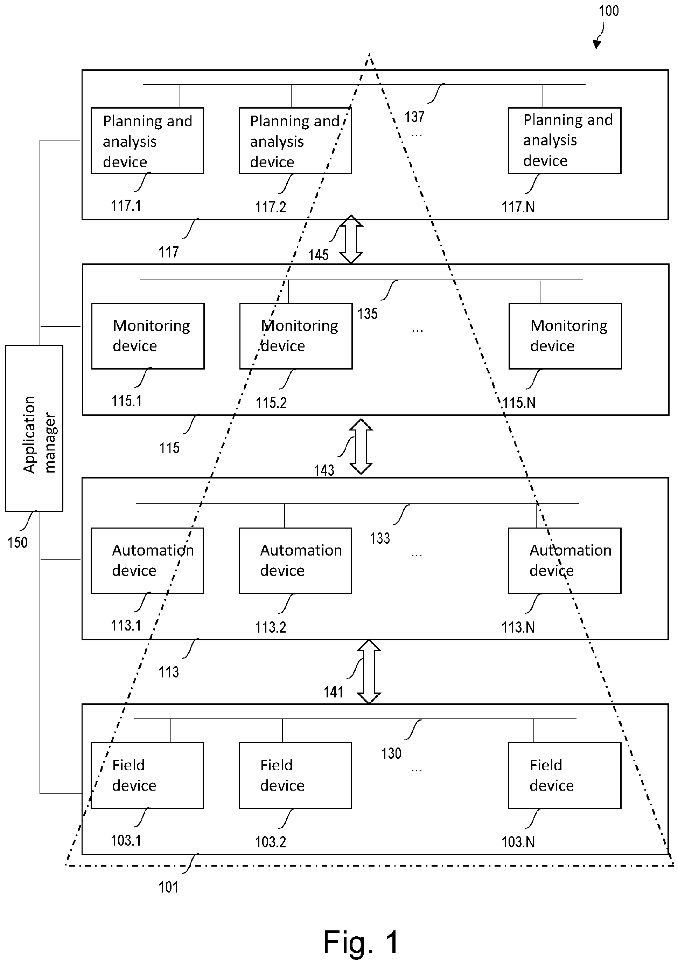

FIG. 1 depicts a distributed manufacturing automation system in accordance with an example of the present subject matter.

As indicted in FIG. 1, the distributed manufacturing automation system 100 is configured according to a hierarchical pyramidal model. The hierarchical pyramid model may be the ISA-95 pyramid model. With this configuration, different groups of devices are connected over respective networks and the data is communicated between the manufacturing facility and the groups of devices following a predefined data flow using specific connections.

The distributed manufacturing automation system 100 is organized in different levels 101, 113, 115 and 117 of the hierarchical pyramidal model. The first level 101 comprises field devices 103.1 through 103.N. The field devices 103.1-N may include sensors, meters, motor drives, industrial robots, vision cameras, actuators or other such field devices. The field devices 103.1-N may be used to monitor and/or control one or more manufacturing processes. The field devices 103.1-N may be configured to transfer the data of the manufacturing process to the second level 113. The field devices 103.1-N may be used to control one or more manufacturing processes. For that, the field devices 103.1-N may be configured to generate and/or collect process data relating to control of the manufacturing process. The field devices 103.1-N may be configured to transfer the process data of the manufacturing process to devices of other levels. For example, the manufacturing parameters of the manufacturing process may be controlled through actuators based on the analysis. The manufacturing process may refer to the steps of a method used to prepare a composition in a manufacturing batch amount. A manufacturing process may, for example, include a joining process and/or shearing and forming process and/or molding process and/or machining process. The manufacturing process may have one or more configurable manufacturing parameters such as mixing rate, temperature etc. Different types of control of the manufacturing process may be used. Each type of control of the manufacturing process may comprise an analysis step for analyzing of one or more manufacturing properties of the manufacturing process and a control step for adjusting one or more manufacturing parameters of the manufacturing process based on the analysis. The manufacturing property of the manufacturing process may, for example, comprise duration, temperature, pressure, speed, quantity etc. The analysis step may comprise monitoring and/or processing of process data of the manufacturing process. The different types of control may differ, for example, in the type of the analysis performed and/or in the required time frame of the control e.g., one or more manufacturing parameters of the manufacturing process may need to be controlled in real-time in order to meet required performance. Each type of control of the manufacturing process may require specific input data. The input data may comprise values of one or more manufacturing properties which may be obtained directly from the acquired process data or be obtained after pre-processing the process data. In addition, each type of control of the manufacturing process may have different processing resource requirement.

The second level 113 comprises automation devices 113.1-N. The automation devices 113.1-N may comprise CNC machines, PLCs, etc. The automation devices 113.1-N may receive the data including manufacturing properties from various sensors and may drive actuators based on the processed sensor signals and program or control technique. The field devices 103.1-N together with the automation devices 113.1-N may form an automation system. Examples of automation systems may include a batch control system, continuous control system, or discrete control system. The third level 115 comprises monitoring devices 115.1-N. The monitoring devices 115.1-N facilitates intervening functions, supervising various manufacturing properties, setting production targets, historical archiving, setting machine start and shutdown, etc. The monitoring devices 115.1-N may, for example, comprise DCS devices or SCADA devices. The fourth level 117 comprises planning and analysis devices (PA devices) 117.1-N. The planning and analysis devices 117.1-N may be configured to perform production planning, customer and market analysis, orders and sales, machine learning etc.

The devices within each level of the distributed manufacturing automation system 100 may be connected with each other over a respective network which is adapted to transmit data with the aid of a standard protocol. For example, the field devices 103.1-N may be connected with each other over a network 130. The automation devices 113.1-N may be connected with each other over a network 133. The monitoring devices 115.1-N may be connected with each other over a network 135. The planning and analysis devices 117.1-N may be connected with each other over a network 137.

The field devices 103.1-N may communicate with the automation devices 113.1-N via a connection 141. The connection 141 may be an analogue connection, field bus based connection or Ethernet based connection. The automation devices 113.1-N may communicate with the monitoring devices 115.1-N via a connection 143. The connection 143 may be an Ethernet based connection. The monitoring devices 115.1-N may communicate with the planning and analysis devices 117.1-N via a connection 145. The connection 145 may be an Ethernet based connection. Each of the connections 141, 143 and 145 may be provided with a firewall that controls the communication of the data through the respective connection.

The devices of the distributed manufacturing automation system 100 may cooperate according to this hierarchical pyramidal model in order to perform different types of control of the manufacturing process. For example, using the system 100, an operating division of a chemical company may monitor its production quality and actively react to product quality issues by automatically generating feedback to the automation system.

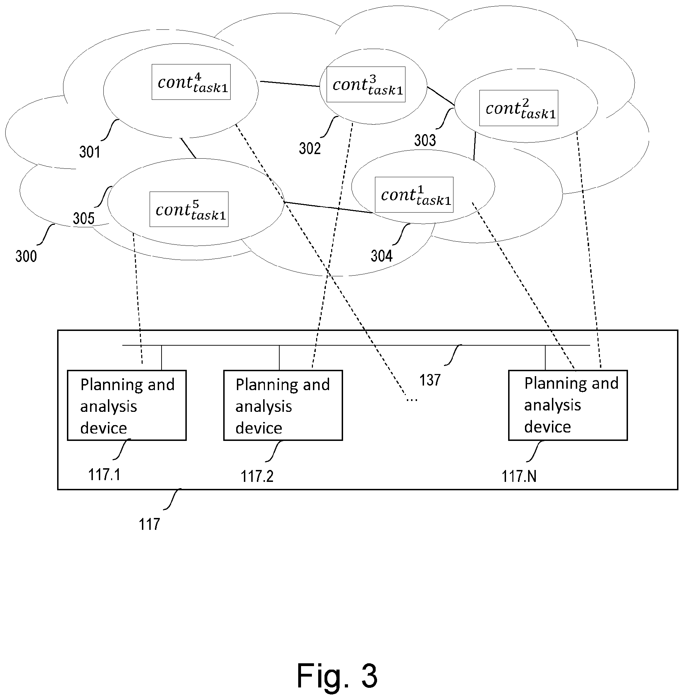

The devices of the distributed manufacturing automation system 100 may be controlled remotely by an application manager 150. The application manager 150 may be configured to connect to each device of the distributed manufacturing automation system 100 through a connection. The connection may, for example, comprise a network connection. The application manager 150 may for example deploy and control execution of one or more manufacturing tasks in the distributed manufacturing automation system 100. Example implementations of the manufacturing task are described wit reference to FIGs. 3 to 6.

The application manager 150 may be referred to as management plane. The application manager 150 may be secured using a multi-level administration and user management model. For example, administrators process and approve critical developer requests and assign rights to developers to deploy certain application components and communication rights. After being assigned the appropriate rights and roles, a development team working on a dedicated use case may manage using the application manager all configuration changes in an end-to-end fashion with a minimal dependency on other teams or administrators. The application manager 150 may use one or more software tools to remotely manage workloads such as workloads on KUBERNETES clusters. Such software tools may include SUSE RANCHER tools or AZURE ARC tools.

The application manager 150 may be configured for performing an initial deployment or installation of application components; for upgrading, downgrading, uninstalling one or multiple application components; for testing and propagating configuration changes across multiple application components; and for creating secure communication routes between application components. This can include (software defined) network configuration changes or application configuration changes to establish connectivity between components, either directly based on a client-server model or decoupled by utilizing intermediate message brokers. The application manager 150 may further be configured for monitoring and, in consequence, automatic or manual actions to detect and resolve error states. This may also include tracing of communication between application components to identify bottlenecks.

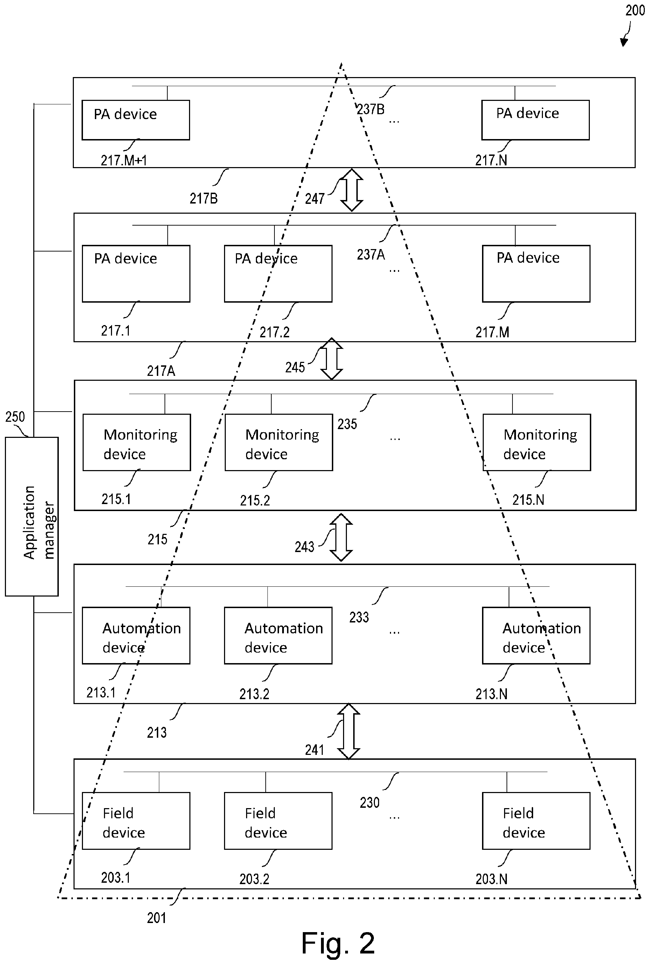

FIG. 2 depicts a distributed manufacturing automation system in accordance with an example of the present subject matter.

As indicted in FIG. 2, the distributed manufacturing automation system 200 is configured according to a hierarchical pyramidal model. The hierarchical pyramid model may be the ISA-95 pyramid model. With this configuration, different groups of devices are connected over respective networks and the data is communicated between the manufacturing facility and the groups of devices following a predefined data flow using specific connections.

The distributed manufacturing automation system 200 is organized in different levels 201, 213, 215, 217A and 217B of the hierarchical pyramidal model. The first level 201 comprises field devices 203.1 through 203.N. The field devices 203.1-N may include sensors, meters, motor drives, industrial robots, vision cameras, actuators or other such field devices. The field devices 203.1-N may be used to monitor and/or control one or more manufacturing processes. The field devices 203.1-N may be configured to generate and/or collect process data relating to control of the manufacturing process. The field devices 203.1-N may be configured to transfer the data of the manufacturing process to the second level 213. The second level 213 comprises automation devices 213.1-N. The automation devices 213.1-N may comprise CNC machines, PLCs, etc. The automation devices 213.1-N may receive the data including manufacturing properties from various sensors and may drive actuators based on the processed sensor signals and program or control technique. The third level 215 comprises monitoring devices 215.1-N. The monitoring devices 215.1-N facilitates intervening functions, supervising various manufacturing properties, setting production targets, historical archiving, setting machine start and shutdown, etc. The monitoring devices 215.1-N may, for example, comprise DCS devices or SCADA devices. The fourth and fifth levels 217A and 217B comprise planning and analysis devices 217.1-N. The planning and analysis devices 217.1-N may be configured to perform production planning, customer and market analysis, orders and sales, machine learning etc. By contrast to the system of FIG. 1, part of the planning and analysis devices 217.M+1-N may be implemented in a cloud platform to leverage cloud-based applications and services. The cloud platform may, for example, be provided by a cloud provider as a platform-as-a-service (PaaS). Hence, a subgroup 217.1 to 217.M of the of PA devices 215 may be implemented as a local data center using the network 237A and the remaining subgroup 217.M+1 to 217.N may be implemented in the cloud platform using a network 237B. The devices in the cloud platform may be configured to communicate through the internet 247 in order to exchange data with other devices of the system 200. The devices of the local data centers as well as the devices of the cloud platform may cooperate in order to perform different types of control of the manufacturing process.

The devices within each level of the distributed manufacturing automation system 200 may be connected with each other over a respective network which is adapted to transmit data with the aid of a standard protocol. For example, the field devices 203.1-N may be connected with each other over a network 230. The automation devices 213.1-N may be connected with each other over a network 233. The monitoring devices 215.1-N may be connected with each other over a network 235. The planning and analysis devices 217.1-M may be connected with each other over a network 237A. The planning and analysis devices 217.M+1-N may be connected with each other over a network 237B.

The field devices 203.1-N may communicate with the automation devices 213.1-N via a connection 241. The connection 241 may be an analogue connection, field bus based connection or Ethernet based connection. The automation devices 213.1-N may communicate with the monitoring devices 215.1-N via a connection 243. The connection 243 may be an Ethernet based connection. The monitoring devices 215.1-N may communicate with the planning and analysis devices 217.1-M via a connection 245. The connection 245 may be an Ethernet based connection. The planning and analysis devices 217.1-M may communicate with the planning and analysis devices 217.M+1-N via a connection 247. The connection 247 may be an internet connection. Each of the connections 241, 243, 245 and 247 may be provided with a firewall that controls the communication of the data through the respective connection.

The devices of the distributed manufacturing automation system 200 may cooperate according to this hierarchical model in order to perform different types of control of the manufacturing process. For example, using the system 200, an operating division of a chemical company may monitor its production quality and actively react to product quality issues by automatically generating feedback to the automation system.

The devices of the distributed manufacturing automation system 200 may be controlled remotely by an application manager 250. The application manager 250 may be configured to connect to each device of the distributed manufacturing automation system 200 through a connection. The connection may, for example, comprise a network connection. The application manager 250 may for example deploy and control execution of one or more manufacturing tasks in the distributed manufacturing automation system 200. Example implementations of the manufacturing task are described wit reference to FIGs. 3 to 6.

In one example implementation, the system of FIG. 2 may further be provided with a Namur Open Architecture (NOA). The application manager 250 may have access to the NOA and may control the operation of the NOA.

The application manager 250 may be referred to as management plane. The application manager 250 may be secured using a multi-level administration and user management model. For example, administrators process and approve critical developer requests and assign rights to developers to deploy certain application components and communication rights. After being assigned the appropriate rights and roles, a development team working on a dedicated use case may manage using the application manager all configuration changes in an end-to-end fashion with a minimal dependency on other teams or administrators. The application manager 150 may use one or more software tools to remotely manage workloads such as workloads on KUBERNETES clusters. Such software tools may include SUSE RANCHER tools or AZURE ARC tools.

The application manager 250 may be configured for performing an initial deployment or installation of application components; for upgrading, downgrading, uninstalling one or multiple application components; for testing and propagating configuration changes across multiple application components; and for creating secure communication routes between application components.

This can include (software defined) network configuration changes or application configuration changes to establish connectivity between components, either directly based on a client-server model or decoupled by utilizing intermediate message brokers. The application manager 250 may further be configured for monitoring and, in consequence, automatic or manual actions to detect and resolve error states. This may also include tracing of communication between application components to identify bottlenecks.

FIG. 3 depicts an overlay network according to an example of the present subject matter.

The overlay network 300 may, for example, be selected by the application manager 150 of FIG. 1 from the created overlay networks for deploying and executing an application. The overlay network 300 may be a software defined subnet on top of the physical network 137 of FIG. 1. That is, the underlying physical network associated with the overlay network 300 is the physical network 137.

The overlay network 300 may be configured according to an overlay network protocol in order to enable communication between application containers in overlay nodes which are connected to the overlay network 300. The overlay network protocol may, for example, be VXLAN protocol.

The overlay network 300 may comprise overlay nodes 301 through 305. Only five overlay nodes are shown; however, more or less overlay nodes may also be used according to the present subject matter. The application manager 150 may use a mapping to establish the connection between the overlay network 300 and the physical network 137. In particular, the mapping may indicate for each overlay node, the associated physical node. The mapping may further indicate for each link in the overlay network the associated one or more links in the underlying physical network. The mapping between nodes is indicated by dashed lines. As indicated in FIG. 3, the two overlay nodes 303 and 304 may be allocated resources of the same planning and analysis device 117.N. Each of the overlay nodes 301, 302 and 305 is assigned to a respective distinct planning and analysis device of the level 117 of the distributed manufacturing automation system 100.

The overlay network 300 may be used to deploy containers of an application according to the present subject matter. The application may enable to perform a manufacturing task referred to as first task (task1). The manufacturing task can, for example, be executed at the information level of the automation pyramid. For example, the manufacturing task may comprise a step of pre-processing data, steps of analysis of pre-processed data, and a step of determining manufacturing parameters of the manufacturing process based on the analysis. These manufacturing parameters may be used to control the manufacturing process.

The application may be containerized by the application manager 150 into containers. In one example, the containers may be created using a container platform such as DOCKER platform or KUBERNETES platform. The containers may, for example, be defined according to cloud native standards (CNCF) to support structured declarative configurability (e.g., via text file).

Each container may, for example, be configured to execute a respective step of the manufacturing task. For example, the application may be containerized by the application manager 150 into five containers referred to as: $cont_{task1}^1$, $cont_{task1}^2$, $cont_{task1}^3$, $cont_{task1}^4$ and $cont_{task1}^5$ . The number five of containers is provided for exemplification purpose only and it is not limited to. For example, the container $cont_{task1}^1$ may perform the pre-processing step, the containers $cont_{task1}^2$ , $cont_{task1}^3$ and $cont_{task1}^4$ may perform the analysis steps and the container $cont_{task1}^5$ may perform the step of determining the manufacturing parameters and providing them for enabling control of the manufacturing process. The application manager 150 may deploy the containers in the overlay nodes of the overlay network 300 so that each of the overlay nodes 301 to 305 may comprise one container of the application. The overlay network 300 may allow the containers of the application to communicate between each other. In particular, the overlay network may enable, for example, the container $cont_{task1}^1$ to send the pre-processed data to the containers $cont_{task1}^2$, $cont_{task1}^3$ and $cont_{task1}^4$ so that they can perform the analysis steps. The containers $cont_{task1}^2$, $cont_{task1}^3$ and $cont_{task1}^4$ may for example communicate to the container $cont_{task1}^5$ the result of the analysis, so that the container $cont_{task1}^5$ can perform the step of determining the manufacturing parameters based on the analysis results.

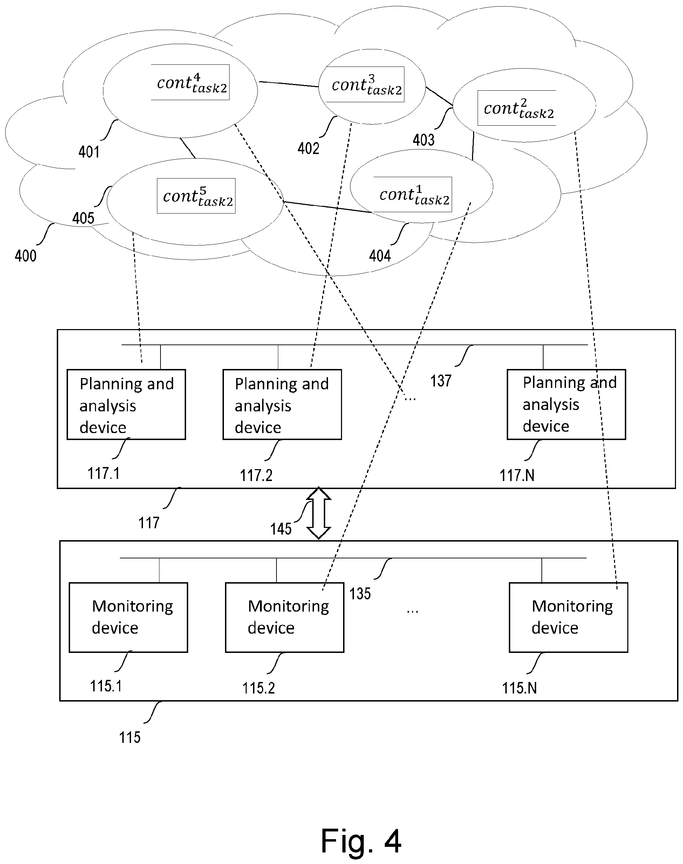

FIG. 4 depicts an overlay network according to an example of the present subject matter.

The overlay network 400 may, for example, be selected by the application manager 150 of FIG. 1 from the created overlay networks for deploying and executing an application. The overlay network 400 may be a software defined subnet on top of the physical networks 135 and 137 of FIG. 1. That is, the underlying physical networks associated with the overlay network 400 are the physical networks 135 and 137.

The overlay network 400 may be configured according to an overlay network protocol in order to enable communication between application containers in overlay nodes which are connected to the overlay network 400. The overlay network protocol may, for example, be VXLAN protocol.

The overlay network 400 may comprise overlay nodes 401 through 405. Only five overlay nodes are shown; however, more or less overlay nodes may also be used according to the present subject matter. The application manager 150 may use a mapping to establish the connection between the overlay network 400 and the physical networks 135 and 137. In particular, the mapping may indicate for each overlay node, the associated physical node. The mapping may further indicate for each link in the overlay network the associated one or more links in the underlying physical network. The mapping between nodes is indicated by dashed lines. As indicated in FIG. 4, the two overlay nodes 403 and 404 may be allocated resources of the monitoring devices 115. N and 115.2 respectively. Each of the overlay nodes 401, 402 and 405 is assigned to a respective distinct planning and analysis device of the level 117 of the distributed manufacturing automation system 100.

The overlay network 400 may be used to deploy containers of an application according to the present subject matter. The application may enable to perform a manufacturing task referred to as second task (task2). The manufacturing task can, for example, be executed at the information level and the supervision level of the automation pyramid. For example, the manufacturing task may comprise monitoring steps that monitor specific manufacturing properties of the manufacturing process, and if the behavior of a manufacturing property becomes different from a reference behavior, the monitoring step may trigger a specific analysis at the information level. For that, analysis steps may be performed at the information level upon receiving the trigger from the monitoring step. The manufacturing task may further comprise a step of determining manufacturing parameters of the manufacturing process based on the analysis. These manufacturing parameters may be used to control the manufacturing process.

The application may be containerized by the application manager 150 into containers. In one example, the containers may be created using a container platform such as DOCKER platform or KUBERNETES platform. The containers may, for example, be defined according to CNCF to support structured declarative configurability (e.g., via text file).

Each container may, for example, be configured to execute a respective step of the manufacturing task. For example, the application may be containerized by the application manager 150 into five containers referred to as: $cont^1_{task2}$, $cont^2_{task2}$, $cont^3_{task2}$, $cont^4_{task2}$ and $cont^5_{task2}$. The number five of containers is provided for exemplification purpose only and it is not limited to. For example, the containers $cont^1_{task2}$ and

$cont^2_{task2}$ may perform the monitoring step, the containers $cont^3_{task2}$ and $cont^4_{task2}$ may perform the analysis steps and the container $cont^5_{task2}$ may perform the step of determining the manufacturing parameters and providing them for enabling control of the manufacturing process. The application manager 150 may deploy the containers in the overlay network 400 so that each of the overlay nodes 401 to 405 may comprise one container of the application. The overlay network 400 may allow the containers of the application to communicate between each other. In particular, the overlay network may enable, for example, the containers $cont^1_{task2}$ and $cont^2_{task2}$ to send the analysis trigger to the containers $cont^3_{task2}$ and $cont^4_{task2}$ so that they can perform the analysis steps. The containers $cont^3_{task2}$ and $cont^4_{task2}$ may for example communicate to the container $cont^5_{task2}$ the result of the analysis, so that the container $cont^5_{task2}$ can perform the step of determining the manufacturing parameters based on the analysis results.

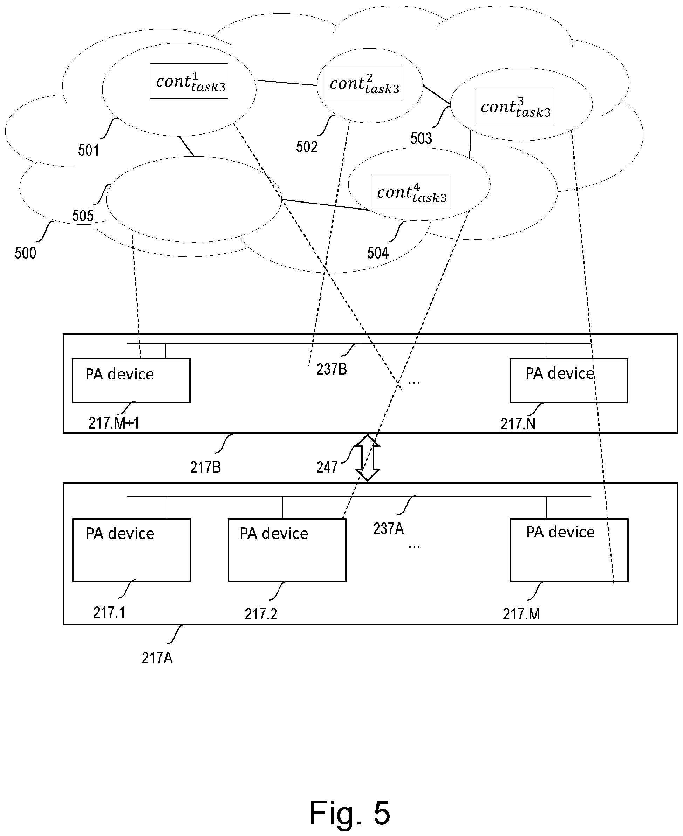

FIG. 5 depicts an overlay network according to an example of the present subject matter.

The overlay network 500 may, for example, be selected by the application manager 250 of FIG. 2 from the created overlay networks for deploying and executing an application. The overlay network 500 may be a software defined subnet on top of the physical networks 237A and 237B of FIG. 2. That is, the underlying physical networks associated with the overlay network 500 are the physical networks 237A and 237B.

The overlay network 500 may be configured according to an overlay network protocol in order to enable communication between application containers in overlay nodes which are connected to the overlay network 500. The overlay network protocol may, for example, be VXLAN protocol.

The overlay network 500 may comprise overlay nodes 501 through 505. Only five overlay nodes are shown; however, more or less overlay nodes may also be used according to the present subject matter. The application manager 250 may use a mapping to establish the connection between the overlay network 500 and the physical networks 237A and 237B. In particular, the mapping may indicate for each overlay node, the associated physical node. The mapping may further indicate for each link in the overlay network the associated one or more links in the underlying physical network. The mapping between nodes is indicated by dashed lines. As indicated in FIG. 5, the two overlay nodes 503 and 504 may be allocated resources of the planning and analysis devices 217.M and 217.2 respectively. Each of the overlay nodes 501, 502 and 505 is assigned to a respective distinct planning and analysis device of the level 217B of the distributed manufacturing automation system 100.

The overlay network 500 may be used to deploy containers of the application according to the present subject matter. The application may enable to perform a manufacturing task referred to as third task (task3). The manufacturing task can, for example, be executed at the information level using local network and cloud platform. For example, the manufacturing task may comprise analysis steps to train, in the cloud platform, a machine learning algorithm to predict optimal manufacturing parameters based on input manufacturing properties. The manufacturing task may further comprise analysis steps to infer the trained machine learning model using current process data of the manufacturing process for determining manufacturing parameters of the manufacturing process. The manufacturing task may further comprise a step of providing the predicted manufacturing parameters of the manufacturing process to be used to control the manufacturing process.

The application may be containerized by the application manager 250 into containers. In one example, the containers may be created using a container platform such as DOCKER platform or KUBERNETES platform. The containers may, for example, be defined according to CNCF to support structured declarative configurability (e.g., via text file).

Each container may, for example, be configured to execute a respective step of the manufacturing task. For example, the application may be containerized by the application manager 250 into four containers referred to as: $cont_{task3}^1$, $cont_{task3}^2$, $cont_{task3}^3$ and $cont_{task3}^4$. The number four of containers is provided for exemplification purpose only and it is not limited to.

For example, the containers $cont_{task3}^1$ and $cont_{task3}^2$ may perform the training step, the container $cont_{task3}^3$ may perform the inference step and the container $cont_{task3}^4$ may perform the step of providing the manufacturing parameters for enabling control of the manufacturing process. The application manager 250 may deploy the containers in the overlay network 500 so that each of the overlay nodes 301 to 304 may comprise one container of the application. The overlay network 500 may allow the containers of the application to communicate between each other. In particular, the overlay network may enable, for example, the containers $cont_{task3}^1$ and $cont_{task3}^2$ to send the trained model to the container $cont_{task3}^3$ so that it can perform the inference step. The container $cont_{task3}^3$ may for example communicate to the container $cont_{task3}^4$ the predicted manufacturing parameters, so that the container $cont_{task3}^4$ can perform the step of providing the manufacturing parameters.

The communication between the containers may be secured by using the secure communication protocol according to the present subject matter. This may particularly be advantageous as the overlay network is layered on top of a public cloud network.

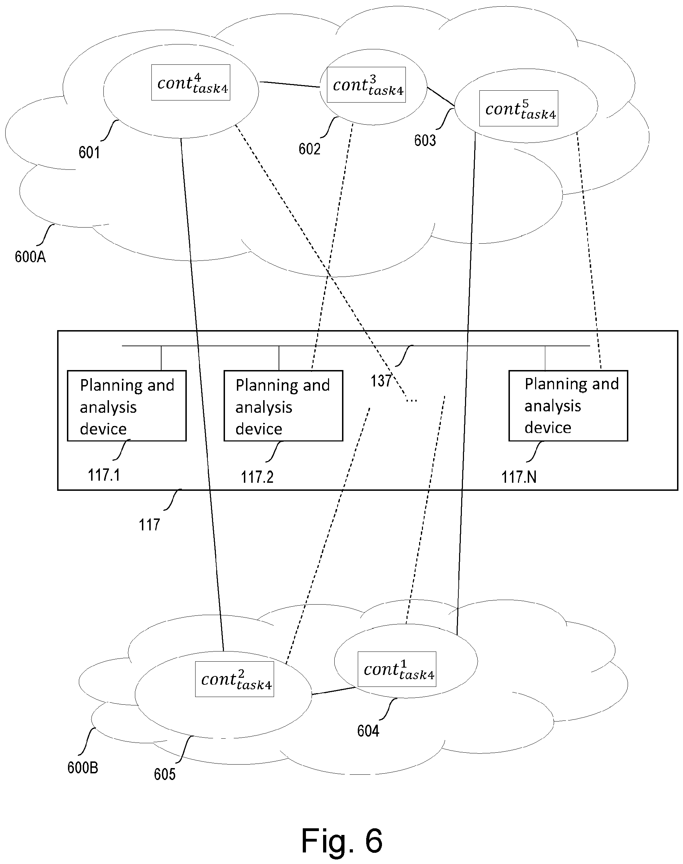

FIG. 6 depicts overlay networks according to an example of the present subject matter.

The overlay networks 600A and 600B may, for example, be selected by the application manager 150 of FIG. 1 from the created overlay networks for deploying and executing an application. The overlay networks 600A and 600B may be a software defined subnet on top of the physical network 137 of FIG. 1. That is, the underlying physical network associated with the two overlay networks 600A and 600B is the physical network 137.

The overlay networks 600A and 600B may be configured according to an overlay network protocol in order to enable communication between application containers in overlay nodes which are connected to the overlay networks 600A and 600B. The overlay network protocol may, for example, be VXLAN protocol.

The overlay network 600A may comprise overlay nodes 601 through 603. Only three overlay nodes are shown; however, more or less overlay nodes may also be used according to the present subject matter. The overlay network 600A may comprise overlay nodes 604 through 605. Only two overlay nodes are shown; however, more overlay nodes may also be used according to the present subject matter. The application manager 150 may use a mapping to establish the connection between the overlay networks 600A and 600B and the physical network 137. In particular, the mapping may indicate for each overlay node, the associated physical node. The mapping may further indicate for each link in the overlay network the associated one or more links in the underlying physical network. The mapping between nodes is indicated by dashed lines. As indicated in FIG. 6, each of the overlay nodes 601 to 605 is assigned to a respective distinct planning and analysis device of the level 117 of the distributed manufacturing automation system 100.

The overlay networks 600A and 600B may be used to deploy containers of an application according to the present subject matter. The application may enable to perform a manufacturing task referred to as fourth task (task4). The manufacturing task can, for example, be executed at the information level of the automation pyramid. For example, the manufacturing task may comprise preprocessing of data step, analysis of pre-processed data steps, and a step of determining manufacturing parameters of the manufacturing process based on the analysis. These manufacturing parameters may be used to control the manufacturing process.

The application may be containerized by the application manager 150 into containers. In one example, the containers may be created using a container platform such as DOCKER platform or KUBERNETES platform. The containers may, for example, be defined according to CNCF to support structured declarative configurability (e.g., via text file).

Each container may, for example, be configured to execute a respective step of the manufacturing task. For example, the application may be containerized by the application manager 150 into five containers referred to as: $cont_{task4}^1$, $cont_{task4}^2$, $cont_{task4}^3$, $cont_{task4}^4$ and $cont_{task4}^5$ . The number five of containers is provided for exemplification purpose only and it is not limited to. For example, the container $cont_{task4}^1$ may perform the pre-processing step, the containers $cont_{task4}^2$ , $cont_{task4}^3$ and $cont_{task4}^4$ may perform the analysis steps and the container $cont_{task4}^5$ may perform the step of determining the manufacturing parameters and providing them for enabling control of the manufacturing process. The application manager 150 may deploy the containers $cont_{task4}^1$ and $cont_{task4}^2$ in the overlay network 600B and the containers, $cont_{task4}^3$, $cont_{task4}^4$ and $cont_{task4}^5$ in the overlay network 600A so that each of the overlay nodes 601 to 605 may comprise one container of the application. The overlay networks 600A and 600B may allow the containers of the application to communicate between each other within the overlay networks and between the overlay networks. In particular, the overlay networks 600A and 600B may enable, for example, the container $cont_{task4}^1$ to send the pre-processed data to the containers $cont_{task4}^2$ , $cont_{task4}^3$ and $cont_{task4}^4$ so that they can perform the analysis steps. The containers $cont_{task4}^2$ , $cont_{task4}^3$ and $cont_{task4}^4$ may for example communicate to the container $cont_{task4}^5$ the result of the analysis, so that the container $cont_{task4}^5$ can perform the step of determining the manufacturing parameters based on the analysis results.

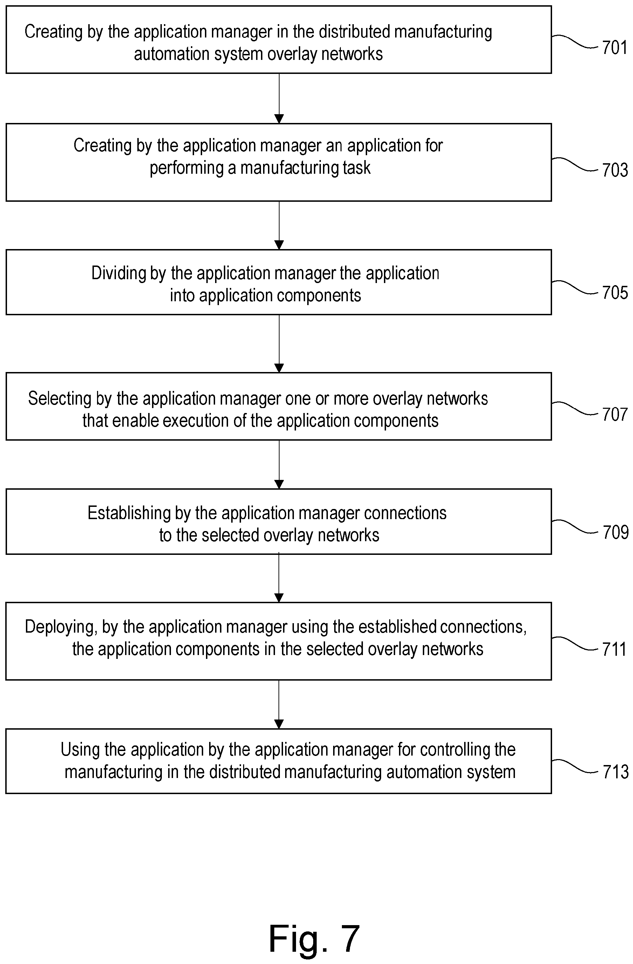

FIG. 7 is a flowchart of a method for controlling a distributed manufacturing automation system according to an example of the present subject matter. For the purpose of explanation, the method of FIG. 7 may be implemented in the system illustrated in previous FIG. 1 or FIG. 2, but is not limited to these implementations. The method of FIG. 7 may, for example, be performed by the application manager 150 or 250.

The application manager may create in step 701 in the distributed manufacturing automation system overlay networks of overlay nodes. Each overlay network of the overlay networks spans one or more levels of the automation pyramid. The overlay nodes may represent system resources of the physical networks. The application manager may create in step 703 an application for performing a manufacturing task.

In one example, step 701 may be performed before step 703. This may speed up the process because the overlay networks may be ready for the application to be deployed. In one example, step 701 may be performed after step 703 or in parallel to step 703. This may save resources that would otherwise be required by overlay networks which may be created and not used. Furthermore, the parallel processing may speed up the process.

The application manager may divide in step 705 the application into application components according to the predefined functions and information flow. The application components belong to one or more levels of the automation pyramid.

In one example, step 705 may be an integral part of step 703, that is, the application may be created comprising containers. This may be advantageous as it may save processing resources for performing separate steps. In one example, step 705 may be performed after step 703. This may be advantageous in case the application can be reused to create another set of containers from the application.

The application manager may select in step 707 one or more overlay networks that enable execution of the application components. The application manager may establish in step 709 one or more connections to the selected one or more overlay networks respectively.

The application manager may deploy in step 711 using the established connections, the application components in the selected overlay network(s). The application manager may use the deployed application in step 713 for planning and/or controlling the manufacturing in the distributed manufacturing automation system. For example, the application manager may start execution of the deployed application, the result of which execution may enable to control the manufacturing process.

In one example, the method steps 701 to 713 may automatically be performed e.g., upon receiving a request to perform the manufacturing task. The request may comprise the code of the application.

In one example method, the method steps 703 to 713 may be repeated for each further manufacturing task. In this case, the different manufacturing tasks may make use (reuse) of the same created overlay networks. In one example method, the method steps 701 to 713 may be repeated for each further manufacturing task. In this case, the overlay networks may be created anew for each manufacturing task. This may be advantageous in case the underlying physical networks change over time.

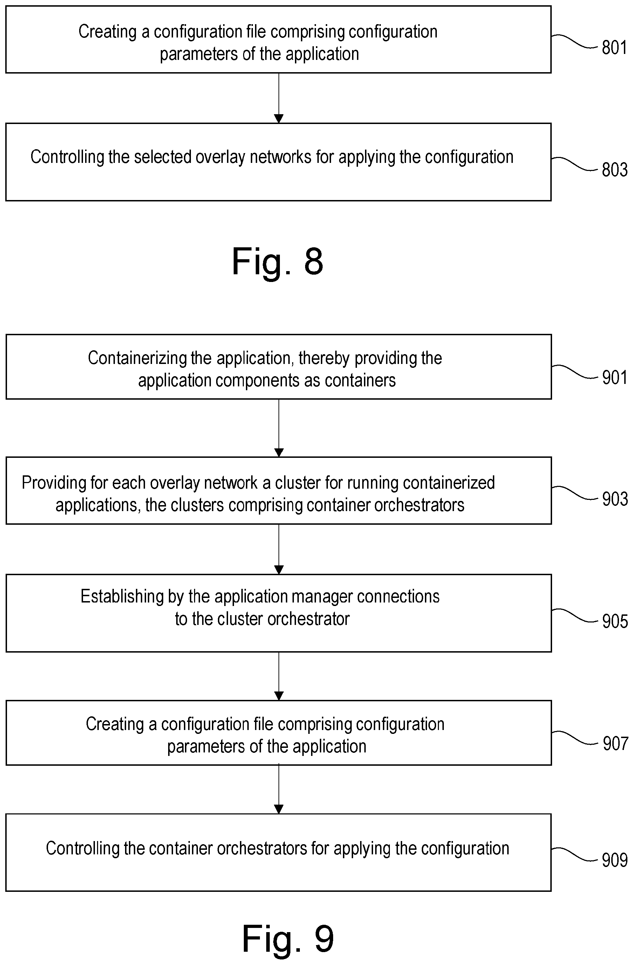

FIG. 8 is a flowchart of a method for deploying an application in a distributed manufacturing automation system according to an example of the present subject matter. The method of FIG. 8 provides an example implementation of the deploying step of FIG. 7. For the purpose of explanation, the method of FIG. 8 may be implemented in the system illustrated in previous FIG. 1 or FIG. 2, but is not limited to these implementations. The method of FIG. 8 may, for example, be performed by the application manager 150 or 250.

The application manager may create in step 801 a configuration file comprising configuration parameters of the application. The application manager may control in step 803 the selected overlay networks for applying the configuration.

The created application may support a declarative configurability so that individual components may be configured declaratively. This may be advantageous because desired properties may be pre-specified and the application manager may autonomously build a suitable configuration by interpreting these specifications. This may prevent the configuration of the application components via direct interaction e.g., with a graphical user interface. The declarative configuration may particularly be useful for describing and managing deployments in a structured fashion.

FIG. 9 is a flowchart of a method for deploying an application in a distributed manufacturing automation system according to an example of the present subject matter. For the purpose of explanation, the method of FIG. 9 may be implemented in the system illustrated in previous FIG. 1 or FIG. 2, but is not limited to these implementations. The method of FIG. 9 may, for example, be performed by the application manager 150 or 250.

The overlay networks may be layered on top of respective cluster of pf physical nodes.

The application manager may containerize in step 901 the application into containers. The application may provide in step 903 for each overlay network the associated cluster for running containerized applications so that each cluster comprises a container orchestrator. The application manager may establish in step 905 the connections with the container orchestrators of the clusters of the selected overlay networks where the application is to be deployed. The application manager may create in step 907 a configuration file comprising configuration parameters of the application. The application manager may control in step 909 the container orchestrators for applying the configuration.

In one example, the method of FIG. 9 may be performed in response to determining that at least one of the selected overly networks for deploying the application covers a specific level of the automation pyramid. That is, the containerization may advantageously be used for this specific level. The specific level ma, for example, the supervision level where the monitoring devices may not have enough resources to provide all possible dependencies required for execution of the application components.

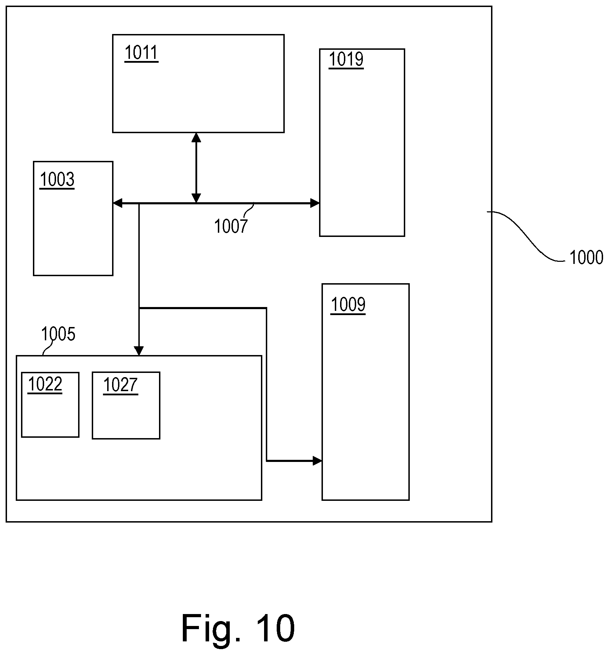

Fig. 10 represents a general computerized system suited for implementing at least part of method steps as involved in the disclosure. The application manager 150 or 250 may, for example, comprise the computer system 1000. The components of the computer system 1000 may include, but are not limited to, one or more processors or processing units 1003, a storage system 1011, a memory system 1005, and a bus 1007 that couples various system components including memory system 1005 to processor 1003. Memory system 1005 may include any one or combination of volatile memory elements (e.g., random access memory (RAM, such as DRAM, SRAM, SDRAM, etc.)) and non-volatile memory elements (e.g., ROM, erasable programmable read only memory (EPROM), electronically erasable programmable read only memory (EEPROM), programmable read only memory (PROM). Note that the memory system 1005 may have a distributed architecture, where various components are situated remote from one another, but can be accessed by the processor 1003.

The software in memory system 1005 may include one or more separate programs, each of which comprises an ordered listing of executable instructions for implementing logical functions, notably functions involved in embodiments of this invention. The software in memory system 1005 shall also typically include a suitable operating system (OS) 1022. The OS 1022 essentially controls the execution of other computer programs, such as possibly software 1027 for implementing methods as described herein.

Computer system 1000 may also communicate with one or more external devices such as a keyboard, a pointing device, a display, etc.; one or more devices that enable a user to interact with computer system; and/or any devices (e.g., network card, modem, etc.) that enable computer system 1000 to communicate with one or more other computing systems. Such communication can occur via I/O interface(s) 1019. Still yet, computer system 1000 may communicate with one or more networks such as a local area network (LAN), a general wide area network (WAN), and/or a public network (e.g., the Internet) via network adapter 1009 that may comprise a Wireless and/or mobile network adapter. As depicted, network adapter 1009 communicates with the other components of computer system 1000 via bus 1007.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

## Claims

1. A method for controlling a distributed manufacturing automation system, the distributed manufacturing automation system (100, 200) being configured in accordance with an automation pyramid, the distributed manufacturing automation system (100, 200) comprising networks (130, 133, 135, 137) and firewalls between levels of the automation pyramid, wherein each network is associated with one level (101, 113, 115, 117) of the automation pyramid, the automation pyramid indicating predefined functions of the networks and an information flow between the levels of the automation pyramid; the method comprising:

   providing an application manager (150, 250) that is configured to remotely connect to the distributed manufacturing automation system (100, 200);
   creating (701) by the application manager (150, 250) in the distributed manufacturing automation system (100, 200) overlay networks of nodes (300, 400, 500, 600),
   wherein each overlay network of the overlay networks spans one or more levels of the automation pyramid, wherein the nodes represent system resources of the networks;
   creating (703) by the application manager (150, 250) an application for performing a manufacturing task;
   dividing (705) by the application manager (150, 250) the application into application components according to the predefined functions and information flow, wherein the application components belong to one or more levels (101, 113, 115, 117) of the automation pyramid;
   selecting (707) by the application manager one or more overlay networks that enable execution of the application components;
   establishing (709) by the application manager (150, 250) connections to the selected overlay networks (300, 400, 500, 600);
   deploying (711), by the application manager (150, 250) using the established connections, the application components in the selected overlay networks (300, 400, 500, 600);

using (713) the application by the application manager (150, 250) for planning and/or controlling a manufacturing process in the distributed manufacturing automation system (100, 200).

2. The method of claim 1, wherein deploying the application components comprises:

creating (801) a configuration file comprising configuration parameters of the application; and controlling (803) the selected overlay networks for applying the configuration.

3. The method of claim 2, the configuration parameters comprising: software-defined networking parameters, memory usage parameters and CPU usage parameters.

4. The method of claim 3, the software-defined networking parameters comprising firewall parameters of the firewalls for communication between the application components through the firewalls.

5. The method of any of the preceding claims, comprising: creating a security zone in the selected overlay networks, the security zone comprising a subset of the nodes of the selected overlay networks that enable execution of the application, wherein the nodes of the security zone are configured with specific communication rules and specific usage rules that are fulfilled by the deployed application only.

6. The method of any of the preceding claims, further comprising: configuring the application components to communicate according to a secure communication protocol in order to perform the manufacturing task.

7. The method of claim 6, wherein the communication protocol indicates for each application component to communicate with another application component using:

a direct communication according to a client-server model; or
an indirect communication through an intermediate module that translates a message from a messaging protocol of the application component to another messaging protocol of the other application component; or
a communication through a firewall based on predefined firewall parameters.

8. The method of any of the preceding claims, further comprising re-establishing connections to the selected overlay networks for controlling execution of the application or updating the application, the updating of the application comprising updating one or more application components of the application and/or uninstalling one or more application components of the application.

9. The method of any of the preceding claims, the method further comprising:

containerizing (901) the application, thereby providing the application components as containers;
providing (903) for each overlay network a cluster for running containerized applications, the clusters comprising container orchestrators, wherein the connections are established (905) with the container orchestrators of the clusters of the selected overlay networks;

wherein deploying the application components comprises:

creating (907) a configuration file comprising configuration parameters of the application; and controlling (909) the container orchestrators for applying the configuration.

10. The method of any of the preceding claims, wherein the functions comprise different types of functions so that each network (130, 133, 135, 137) is configured to perform a specific type of the functions, wherein the information flow indicates the input and output of each network (130, 133, 135, 137) and the chronological order in which the inputs and outputs of the networks (130, 133, 135, 137) are provided.

11. The method of any of the preceding claims, the functions comprising real-time functions and non-real time functions.

12. The method of any of the preceding claims, wherein the application components belong to multiple levels of the automation pyramid, wherein the selected overlay networks span one or more levels of said multiple levels.

13. A computer program product comprising a computer-readable storage medium having computer-readable program code embodied therewith, the computer-readable program code configured to implement the method of any of the preceding claims.

14. A distributed manufacturing automation system (100, 200), the distributed manufacturing automation system (100, 200) being configured in accordance with an automation pyramid, the distributed manufacturing automation system (100, 200) comprising networks (130, 133, 135, 137) and firewalls between levels (101, 113, 115, 117) of the automation pyramid, wherein each network is associated with one level of the automation pyramid, the automation pyramid indicating predefined functions of the networks and an information flow between the levels of the automation pyramid; the distributed manufacturing automation system (100, 200) comprising an application manager (150, 250) being configured for:

creating in the distributed manufacturing automation system (100, 200) overlay networks (300, 400, 500, 600) of nodes, wherein each overlay network of the overlay networks spans one or more levels of the automation pyramid, wherein the nodes represent system resources of the networks (130, 133, 135, 137); creating an application for performing a manufacturing task; dividing the application into application components according to the predefined activities and information flow, wherein the application components belong to one or more levels (101, 113, 115, 117) of the automation pyramid; selecting one or more overlay networks (300, 400, 500, 600) that enable execution of the application components; establishing connections to the selected overlay networks (300, 400, 500, 600); deploying using the established connections, the application components in the selected overlay networks (300, 400, 500, 600); using the application for planning and/or controlling a manufacturing process in the distributed manufacturing automation system (100, 200).

15. The system of claim 14, wherein the manufacturing process is a process for producing chemicals or biochemicals.

Fig. 1

200

Fig. 2

$cont_{task1}^4$

$cont_{task1}^3$

$cont_{task1}^2$

301

302

303

$cont_{task1}^5$

$cont_{task1}^1$

305

304

300

Planning and analysis device

Planning and analysis device

137

Planning and analysis device

117.1

117.2

117.N

117

...

Fig. 3

Fig. 4

Fig. 5

Fig. 6

Creating by the application manager in the distributed manufacturing automation system overlay networks — 701

↓

Creating by the application manager an application for performing a manufacturing task — 703

↓

Dividing by the application manager the application into application components — 705

↓

Selecting by the application manager one or more overlay networks that enable execution of the application components — 707

↓

Establishing by the application manager connections to the selected overlay networks — 709

↓

Deploying, by the application manager using the established connections, the application components in the selected overlay networks — 711

↓

Using the application by the application manager for controlling the manufacturing in the distributed manufacturing automation system — 713

# Fig. 7

Creating a configuration file comprising configuration parameters of the application — 801

Controlling the selected overlay networks for applying the configuration — 803

# Fig. 8

Containerizing the application, thereby providing the application components as containers — 901

Providing for each overlay network a cluster for running containerized applications, the clusters comprising container orchestrators — 903

Establishing by the application manager connections to the cluster orchestrator — 905

Creating a configuration file comprising configuration parameters of the application — 907

Controlling the container orchestrators for applying the configuration — 909

# Fig. 9

1011

1019

1003

1007

1000

1005

1009

1022

1027

Fig. 10

Europäisches
Patentamt

European
Patent Office

Office européen
des brevets

## EUROPEAN SEARCH REPORT

Application Number

EP 23 15 9892

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/316729 A1 (CHAUVET ANTONIO [FR] ET AL) 1 November 2018 (2018-11-01) * paragraph [0042] – paragraph [0226] * ----- | 1-15 | INV. G05B19/418 |
| A | US 2022/404808 A1 (AMARO JR ANTHONY [US] ET AL) 22 December 2022 (2022-12-22) * paragraph [0076] – paragraph [0296] * ----- | 1-15 | |
| A | US 2021/243284 A1 (WOUHAYBI RITA H [US] ET AL) 5 August 2021 (2021-08-05) * paragraph [0032] – paragraph [0127] * ----- | 1-15 | |
| A | US 2021/311760 A1 (OKI BRIAN MASAO [US] ET AL) 7 October 2021 (2021-10-07) * paragraph [0017] – paragraph [0069] * ----- | 1-15 | |
| A | US 2018/375728 A1 (GANGIL AKASH [US] ET AL) 27 December 2018 (2018-12-27) * paragraph [0012] – paragraph [0056] * ----- | 1-15 | |

TECHNICAL FIELDS
SEARCHED      (IPC)

G05B
H04L

The present search report has been drawn up for all claims

| Place of search | Date of completion of the search | Examiner |
|---|---|---|
| The Hague | 21 August 2023 | Cîrîc, George |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.............................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 15 9892

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2023

| Patent document cited in search report | Publication date | Patent family member(s) | Publication date |
|---|---|---|---|
| US 2018316729 A1 | 01-11-2018 | AU 2016337406 A1 | 17-05-2018 |
| | | AU 2016339061 A1 | 17-05-2018 |
| | | AU 2016339067 A1 | 17-05-2018 |
| | | AU 2022201372 A1 | 24-03-2022 |
| | | AU 2022203956 A1 | 23-06-2022 |
| | | CA 3001782 A1 | 20-04-2017 |
| | | CA 3001790 A1 | 20-04-2017 |
| | | CA 3001801 A1 | 20-04-2017 |
| | | CN 108369533 A | 03-08-2018 |
| | | CN 108513655 A | 07-09-2018 |
| | | CN 108885560 A | 23-11-2018 |
| | | EP 3362895 A1 | 22-08-2018 |
| | | EP 3362896 A1 | 22-08-2018 |
| | | EP 3362897 A1 | 22-08-2018 |
| | | EP 3926475 A1 | 22-12-2021 |
| | | EP 4202681 A1 | 28-06-2023 |
| | | ES 2941337 T3 | 22-05-2023 |
| | | RU 2018117280 A | 14-11-2019 |
| | | RU 2018117282 A | 14-11-2019 |
| | | RU 2018117284 A | 14-11-2019 |
| | | US 2018024537 A1 | 25-01-2018 |
| | | US 2018299873 A1 | 18-10-2018 |
| | | US 2018316729 A1 | 01-11-2018 |
| | | US 2021356944 A1 | 18-11-2021 |
| | | US 2023161332 A1 | 25-05-2023 |
| | | WO 2017064554 A1 | 20-04-2017 |
| | | WO 2017064560 A1 | 20-04-2017 |
| | | WO 2017064565 A1 | 20-04-2017 |
| US 2022404808 A1 | 22-12-2022 | CN 115480530 A | 16-12-2022 |
| | | DE 102022114543 A1 | 22-12-2022 |
| | | GB 2612161 A | 26-04-2023 |
| | | JP 2022192042 A | 28-12-2022 |
| | | US 2022404808 A1 | 22-12-2022 |
| US 2021243284 A1 | 05-08-2021 | CN 111164952 A | 15-05-2020 |
| | | DE 112018005879 T5 | 20-08-2020 |
| | | JP 7171713 B2 | 15-11-2022 |
| | | JP 2021503639 A | 12-02-2021 |
| | | JP 2023024983 A | 21-02-2023 |
| | | KR 20200088803 A | 23-07-2020 |
| | | US 2019041824 A1 | 07-02-2019 |
| | | US 2019041830 A1 | 07-02-2019 |
| | | US 2019042378 A1 | 07-02-2019 |
| | | US 2020310394 A1 | 01-10-2020 |
| | | US 2021243284 A1 | 05-08-2021 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.                    EP 23 15 9892

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2023

| Patent document cited in search report | Publication date | Patent family member(s) | | Publication date |
|---|---|---|---|---|
| | | US 2022329676 A1 | | 13-10-2022 |
| | | US 2022360653 A1 | | 10-11-2022 |
| | | WO 2019099111 A1 | | 23-05-2019 |
| US 2021311760 A1 | 07-10-2021 | CN 115280728 A | | 01-11-2022 |
| | | EP 4073987 A1 | | 19-10-2022 |
| | | US 2021311760 A1 | | 07-10-2021 |
| | | WO 2021202288 A1 | | 07-10-2021 |
| US 2018375728 A1 | 27-12-2018 | NONE | | |

EPO FORM P0459

For more details about this annex : see Official Journal of the European Patent Office, No. 12/82

page 2 of 2